# EUROPEAN PATENT APPLICATION

(11) **EP 0 858 046 A2**
(43) Date of publication of application: **12.08.1998**
(21) Application number: 98300877.2
(22) Date of filing: 06.02.1998
(51) Int. Cl.: G06K 7/00

(54) **Method and apparatus for integrated circuit card**

(30) Priority: 07.02.1997 US 37696 P
(71) Applicant: OKI AMERICA, INC., Hackensack, NJ 07601 (US)
(72) Inventor: Copeland, Jeffrey P., Jefferson, Massachusetts 05122 (US); Vandenengel, Gerald W., Grafton, Massachusetts 01519 (US); Chau, Paul W., Natick, Massachusetts 01760 (US)
(74) Representative: Read, Matthew Charles

(57) **Abstract**

A portable integrated circuit card reader system provides for enhanced functionality and interconnectability with external devices. A printed circuit board arrangement includes a housing having first and second parallel planar surfaces and a printed circuit board disposed in the housing, including a substrate having a thickness of about 0.020 in. (0.5mm), and including a portion which engages an external connector through an opening in the housing. The printed circuit board is held by the housing at a first position, parallel to and between the planar surfaces of the housing, at the opening in the housing, and is held at a second position different from the first position, parallel to the planar surfaces of the housing and adjacent to the first parallel planar surface of the housing, the printed circuit board having a flex region between the first position and the second position. An interface module includes a housing, serial transceiver circuitry disposed in the housing, a first input/output connector which connects to an input/output port of the portable IC card reader, a cable coupling the connector to the transceiver circuitry, and a second input/output port which couples the serial interface module transceiver to an external device. A method of operating the portable IC card reading device includes reading a stored value from an IC card when the IC card is inserted in the device, receiving user input corresponding to an amount of a planned purchase, and automatically calculating and displaying an expected balance after the planned purchase. Further, after making the planned purchase with the IC card, a stored value from the IC card is read when the IC card is inserted in the device, and the value read is displayed.

## Description

### Field of the Invention

The invention relates to the field of integrated circuit (IC) cards (also referred to sometimes as 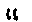 chip cards 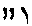 ), and in particular to IC card readers.

### Background of the Invention

A so-called integrated circuit card, also referred to as a "smart card" and/or an "IC card" herein, is a credit card-sized carrier substrate, generally formed of a plastic material, which carries circuitry for storing information, such as financial information. These cards are gaining acceptance with many consumers as an alternative to cash for purchases. Smart cards can already be used in many countries of the world instead of coins or paper currency to make purchases. In a typical smart card electronic cash system, an IC on the card, either with an on-board micro-processor or just a memory chip, stores information, i.e., a "token," which represents the value or "balance" of electronic cash remaining on the card. As the user makes purchases with the card, this stored value is decreased electronically (internally) by the amount of the purchase.

Therefore, these IC cards are similar to a credit card with embedded integrated circuitry including, for example, both volatile and nonvolatile memory elements. The financial information is stored in these memory elements. In order to access the information in the IC card, an interface device, i.e., an IC card "reader," is required. There are two different kinds of IC card reader/interface systems classified based on their size and functionality. The first kind of IC card reader/interface device is referred to as a terminal device, e.g., a point of sale (POS) terminal, used for financial transactions. These device generally have a large size (form factor), but they have the capability to connect to other on-line systems, such as a financial institution, to provide a communication path between the IC card and the on-line systems. Due to their relatively large size, these terminals are mostly stationary and therefore cannot be carried around by the IC card user.

The second type of IC card reader/interface device is the portable IC card reader. Presently, these device are only used to provide static data display of the stored card information, and do not have the capability to connect to an on-line system to provide more sophisticated applications for the IC card.

There is also a variation of the first type of known IC card reader/interface device which is not as large as the usual terminal type, but is not as readily movable as the portable type. An example of this variation is described in Hirokawa (U.S. Patent 4,672,182). Such a device is designed to function with a personal computer as an add-on, but does not function as a stand alone unit, in contrast with the portable type device mentioned earlier. Such a device is, therefore, more like a terminal type device than a portable device, simply making the personal computer into an IC card terminal.

As should be clear from the above, the two basic kinds of reader/interface systems for IC cards offer either portability or connectivity, but not both. The terminal device is too large to be portable, and the portable device has limited functionality, lacking any communication ability, as compared with the terminal device. There is therefore a need for an IC card reader/interface system combining the benefits of both the terminal and portable type devices.

The portable type device have the advantage of being small enough to carry on one's person. However, the existing portable device does not provide very much functionality to the user, primarily merely providing the ability to view the value stored on the IC card. Additional functionality would be desirable, for example, when a POS terminal type device is not readily available.

In order to provide communications capabilities with external device, the data stored on the IC card must be converted to a form readily transmittable to external device, and reliability of the transmission must be assured. To meet this goal, there is a need for a programmed interface to implement the data conversion and transfer between the IC card and external device through a portable reader.

However, to provide communications capabilities for a portable type device, there are various technical hurdles to overcome. For example, interface circuitry must be compact yet provide sufficient communication ability, in order to provide the desirable functionality without sacrificing the small size of the typical portable device. In particular, interface connections must be designed so as not to unduly increase the thickness of the device which would make it unsuitable for carrying in a wallet, or shirt pocket, for example.

It should also be mentioned that there are a number of U. S. patents relating to various IC cards, card readers and related background technology, and some of these are now listed (alphabetically): Avery et al. (4,719,338); Bergeron (4,764,666); Broschard, III (5,599,203); Burkart (5,584,043); Dethloff et al. (4,968,873); Diehl et al. (5,128,523); Guion (4,675,516); Hara et al. (4,918,631); Harris Jr. et al. (Des. 323,489); Hirokawa (4,672,182); Huis et al. (5,550,361); Iijima (5,369,760); Iijima (5,581,708); Ishii et al. (5,541,985); Iwamoto et al. (Des. 370,213); Johnson et al. (5,149,945); Kapp et al. (5, 233,547); Koenck et al. (5,410,141); Kreft (5,619,683); Kumar (5,265,951); Kuwano et al. (4,922,111); Lei (5,373,146); Luong (Des. 348,439); Marceau et al. (5,491,326); Masuzawa et al. (5,015,830); Mori (4,877,947); Nitta (4,851,654); Oogita (5,227,615); Ozawa et al. (5,357,091); Parienti (5,189,287); Rey (5,272,319); Roberts et al. (5,438,184); Shino (5,296,692); Takahashi (5,406,064); Tatsuno (4,870,604); Terada et al. (5,561,628); Ugon et al. (4,523,297); Vandenengel (5,517,011); and Yoshimatsu et al. (5,615,388).

Further regarding functionality, while the electronic nature of the IC "cash" provides convenience, it also presents some problems or limitations for the user or owner of the card. In particular, there are limitations and problems associated with calculating the expected balance remaining on a smart card after a purchase. For example, when a consumer makes a normal purchase with a cash transaction using coins or paper currency, an amount greater or equal to the exact purchase price is given to the retailer, after which the retailer returns the appropriate amount of change, i.e., the difference between the purchase amount and the amount tendered. Upon receiving the change, the consumer can easily verify that the correct amount of change has been returned by counting with the change upwards starting from the purchase amount to the amount tendered, for example.

For example, a consumer makes a purchase for $12.73, and gives the merchant $15, using a ten dollar bill and a five dollar bill. The merchant returns $2.27 to the consumer, giving two one dollar bills, one quarter, and two pennies. The consumer verifies that this is the correct change amount by counting upwards with the change, for example: $12.73 plus $2 = $14.73; $14.73 plus 2 cents = $14.75; and $14.75 plus 25 cents = $15.00, the amount tendered.

This calculation is fairly easy to make as it does not require any subtraction with carry, for example, and can also be done step-by-step with the different currency units returned. In some simpler cases, the consumer may also elect to give the exact change, or the exact change for only the decimal part of the value. For example, on a purchase of $12.73, the consumer has the option, if he has the change available, of paying the exact amount of $12.73, or alternatively, paying the exact amount for the decimal portion, e.g., $15.73. In either of these cases the expected change calculation is simplified further or unnecessary.

However, when a purchase is made using electronic means, i.e., an IC card, calculating the expected change is considerably more difficult, while at the same time the requirement to do so is even stronger, since one could be short-changed without knowing it. While in a paper/coin transaction, the consumer typically only gives the retailer the lowest possible amount of money contained in his purse or wallet, in the case of smart card electronic transactions, the consumer is required to present the complete value contained within the IC card to the retailer. This clearly increases the risk of being short-changed by the retailer.

The calculations required to compute the expected change are made much more difficult in this case for at least the following reasons:
1. The amount or balance on the smart card will rarely be an integral number of currency units or contain the exact decimal value of the purchase. For instance, on the previous purchase of $12.73, the consumer may already have a balance of $16.22 on his or her card.
2. The consumer must calculate the expected balance on his or her card after the purchase by performing a subtraction of the purchase price from the balance previously on his or her card. In other words, it is not possible to count up from the purchase price since no change is physically returned. The transaction is essentially equivalent to the consumer giving his or her full wallet to the retailer, and relying on the retailer to remove the correct amount of money. In many cases, this subtraction will also require one or more carries, increasing the chances for error on the part of the consumer. For instance, on the purchase of $12.73 on a card containing $16.22, two carries are required due to the decimal amounts.

Therefore, there is a need for a way to allow the consumer to be able to easily determine the expected remaining balance on his or her IC card prior to and/or after an electronic cash purchase.

With the need for providing increased functionality, as described above, comes the need for a source of power adequate to provide the energy consumed by the associated electronics. IC card reader devices in the past had a sole source of energy, either from the internal batteries or an external means. These and other problems are addressed by various aspects of this invention relating to smart power management, which can manage several sources of energy simultaneously. When the reader is engaged with an external system, the internal batteries or an additional energy source can be activated when required for operation.

### Summary of the Invention

It is an object of the invention to provide an enhanced portable IC card reader device.

It is a further object of the invention to provided a device which overcomes the problems mentioned above.

These and other objects of the present invention are accomplished by the method and apparatus disclosed herein.

An exemplary embodiment of the IC card reader according to the invention is advantageously provided with an input-output (I/O) port for connecting an external interface module to provide communication capability and functionality comparable to the terminal type reader. Further, the interface module can take a variety of forms, including RS232, infra-red (IR), radio frequency (RF) or a modem for interfacing with telephone lines.

The problems associated with interfacing with an external device without adversely affecting the device thickness, is solved according to one aspect of the invention by flexing, or bending, the circuit board. In particular, the board I/O fingers are extended so the board is flexed without undue stress. Near the I/O connector, the board is held between two surfaces in the surrounding plastic case to hold it perpendicular to the outside wall.

An exemplary embodiment of the invention having a solution to the problem of determining the expected change in an electronic transaction by allowing the consumer to easily calculate the expected remaining balance on his or her smart card prior to a purchase. This invention proposes a simple solution to the problem of verifying the correct purchase amount and expected balance when using smart card electronic cash for purchases. It combines a card reader with a keypad in such a way that the user can quickly and accurately verify the expected balance on his or her card following a purchase.

An exemplary embodiment of the invention having a battery compartment for holding two batteries to provide the power necessary to operate the electronics associated with the increased functionality, is provided according to another aspect of the invention.

### Brief Description of the Drawings

These and other features, aspects and advantages are provided by embodiments of the invention described below in the detailed description of the invention and illustrated in the accompanying drawings, in which:
Figs. 1 and 1A-1C illustrate the external appearance of the IC card reader/interface device according to an exemplary embodiment of the invention;
Fig. 2 is an exploded view of the exemplary device of Fig. 1, showing how an interface adapter plug would connect to the device and how batteries would be placed according to an exemplary embodiment of the invention;
Figs. 3 and 3A-3F illustrate a battery tray according to an exemplary embodiment of the invention;
Fig. 4A is a transparent view of the IC card reader device according to one exemplary embodiment of the invention, with an interface module connector connected thereto;
Fig. 4B is a side view of the device according to Fig 4A showing the connector channel;
Fig. 5 is a cross section showing how the circuit board of an exemplary embodiment of the device is bent and held in place;
Fig. 6 is an illustration of an exemplary embodiment of the device showing a pair of devices and interface modules, one with an interface module and connector in a connected condition, and one in an unconnected condition with the battery tray pulled out;
Fig. 7 illustrates the same arrangement as Fig. 6 except that the pair of devices are viewed from a different side, and the battery tray pulled out is not shown;
Figs. 8A and 8B illustrate an embodiment of the device and a basic block diagram of the exemplary embodiment, where the interface module has RS232 type transceiver circuitry;
Figs. 9A-9C illustrate an interface according to an exemplary embodiment of the invention, showing connector ends and the cable therebetween;
Fig. 10 is a state diagram of three operating modes and the transitions therebetween according to an exemplary embodiment of the invention;
Figs. 10A, 10B and 10C are portions of a flow chart of the operation of an exemplary embodiment of the invention;
Fig. 11 is a flow chart of the operation of an interface system according to an exemplary embodiment of the invention;
Fig. 12 is a block diagram of an exemplary embodiment of the invention having a PC interface unit;
Fig. 13 is a block diagram of an exemplary embodiment of the invention having an infra-red (IrDA) interface system;
Fig. 14 is a block diagram of an exemplary embodiment of the invention having a radio frequency (RF) interface system;
Fig. 15 is a block diagram of an exemplary embodiment of the invention having a modem interface unit;
Fig. 16 is a block diagram of an exemplary embodiment of the invention having a modular interface system, and showing the three layers of communication protocol;
Fig. 17 is a flow chart for a first exemplary embodiment of a change-checking method according to the invention;
Fig. 18 is a flow chart for a first alternate exemplary embodiment of a change-checking method according to the invention;
Fig. 19 is a flow chart for a second alternate exemplary embodiment of a change-checking method according to the invention;
Fig. 20 is a flow chart for a third alternate exemplary embodiment of a change-checking method according to the invention;
Fig. 21 is a schematic diagram for an exemplary embodiment of an interface system according to the invention; and
Fig. 22 is a schematic diagram of an exemplary embodiment of the invention.

### Detailed Description of the Preferred Embodiments of the Invention

The invention will now be described in more detail by way of example with reference to the embodiments shown in the accompanying figures. It should be kept in mind that the following described embodiments are presented only by way of example, and should not be construed as limiting the inventive concept to any particular physical configuration.

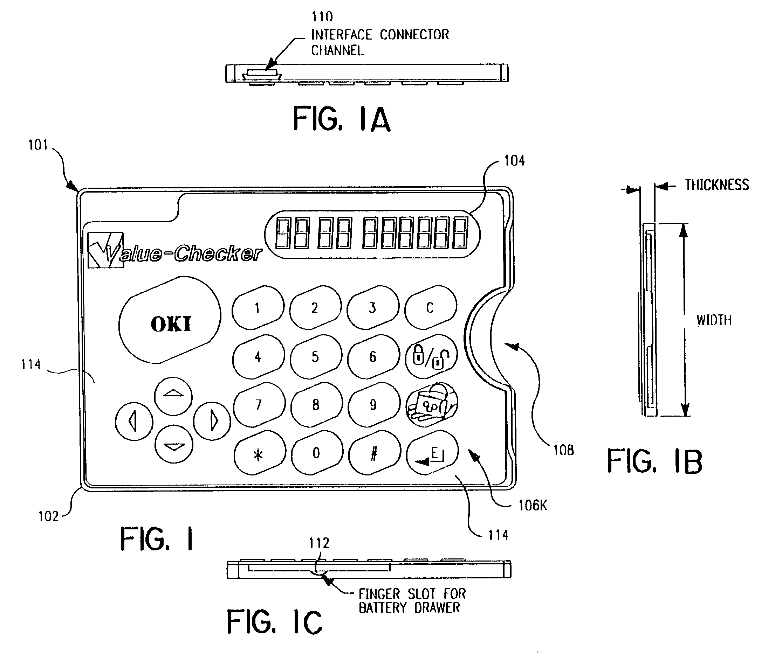

An exemplary embodiment of the invention is illustrated in Fig. 1. An embodiment of the present invention in a commercial form is known as the ValueCheckerPLUS (VC+). This product is an enhancement over the original ValueChecker, incorporating enhanced capability and functionality (Value-Checker and ValueCheckerPLUS are proprietary trademarks and all rights are reserved). (ValueChecker+ will also be used herein for ValueCheckerPLUS.)

The portable reader device 101 (ValueChecker+) of Fig. 1 includes a case 102 made of plastic, for example, a display 104, and a keypad 106K. The keypad 106K is a keypad entry (module) to allow a user to select a variety of predefined functions for use with IC cards. As illustrated, there is a 4 by 5 matrix of numeric and function keys, including as one column of the matrix, four arrow keys. The illustrated embodiment uses a pinpad-sized keypad having a 4 by 5 matrix. However, the invention is not limited to this particular key arrangement, but may encompass other key arrangements within the scope of the invention defined in the claims. A battery tray 112 is provided along one side of the device. A face plate or cover 114 is provided and bears the trademark and company name in the illustration. A slot 108 with a finger cut-out is provided for insertion and removal of an IC card. As can be appreciated from Fig. 1, the device is not much larger in dimensions than an IC card itself, enabling it to be placed conveniently in a shirt pocket or wallet, for example, due to the ingenuity of the engineering and design. The placement of elements described is subject to variation within the spirit of the invention. The placement shown in Fig. 1 is for the purposes of illustration of an exemplary embodiment of the invention.

An interface connector channel 110 is illustrated as provided along one edge of the case 102. With an additional interface module, e.g., a personal computer adapter (PCA) which will be described in more detail later, the capability to interface an IC card with a personal computer (PC) through the portable reader device 101 is provided. The embodiments of the VC+ PCA described later herein, are of a similar size and shape (form factor) as those which could be used with the previous ValueChecker device.

As mentioned at the outset, the compact design of the VC+ portable reader device 101 is one factor that differentiates it from previously known IC card reader devices, e.g., desktop smart card readers and POS terminals, and gives it the advantageous portability. The advantageous slim design opens up a variety of useful application possibilities for the mobile world in which we live.

In the illustrated, exemplary preferred embodiment, the portable reader device 101 is generally rectangular and sized to fit comfortably into a standard shirt pocket or wallet. However, other shapes and sizes are possible within the spirit of the invention, so long as the benefits of compact size and convenience are maintained.

Besides providing an interface to the PC environment when operating with the PCA, the VC+ when operating in the standalone mode is also capable of providing selective information from the IC card to a user. An on-board key pad entry (module) enables the user to control the operation of the portable reader device 101.

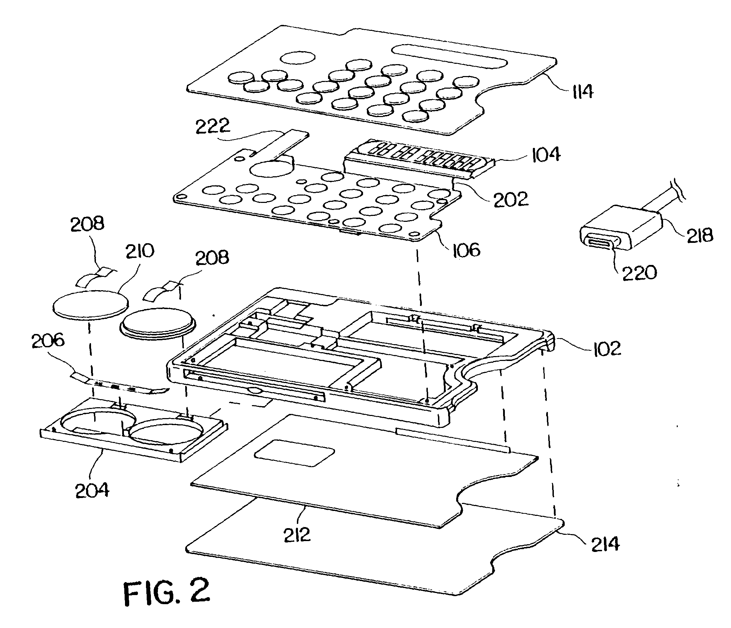

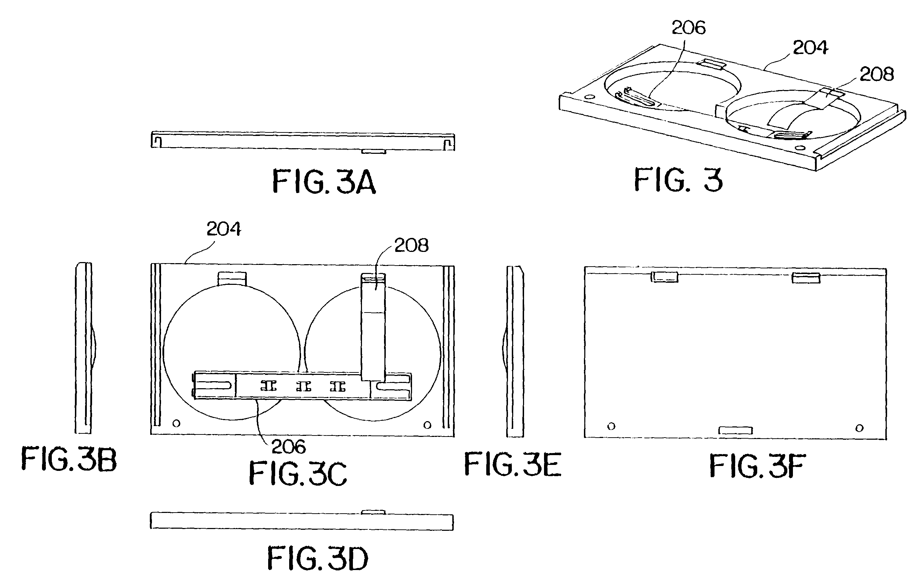

Providing ample power for the increased functionality is another object of the invention. With reference to Figs. 2 and 3, for example, a battery tray 204 having space for two batteries 210 is illustrated. The battery tray 204 may be located on any of the edges of the case 102, and slides in and out for easy access by way of a finger slot. As illustrated, contacts 206 and 208 electrically connect the batteries 210 to the electronic circuitry of the portable reader device 101 (e.g., a painted circuit board PCB). A circuit board 106 has the keys of keypad 106K disposed thereon, along with the electronics required for operation, which will be described later, and thus forms a key pad entry module 106. The circuit board is connected to the display by a ribbon connector 202 in the illustrated embodiment.

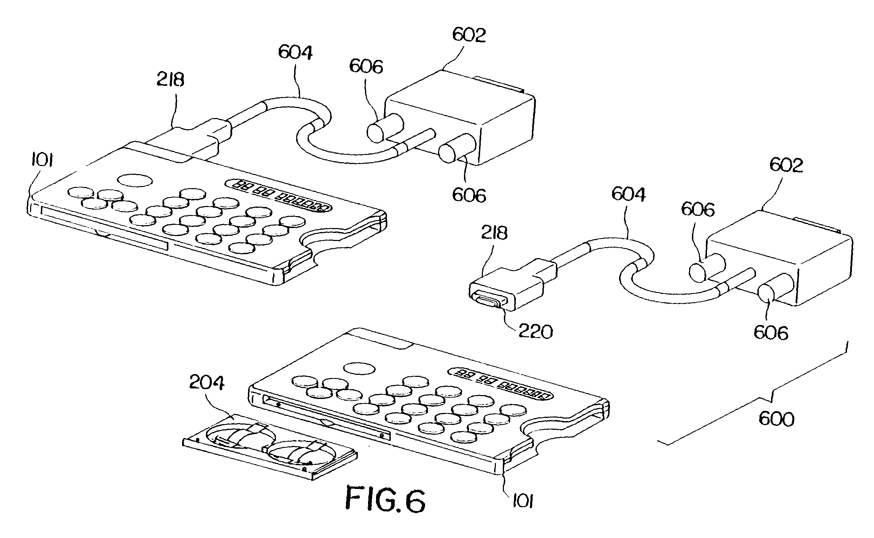

Providing a compact, modular IC card (chip card) interface system is another object of the invention. As mentioned before, the two kinds of conventional reader/interface systems for IC cards offer either portability or connectivity, but not both. In this invention, a novel modular IC card interface system is described. The modular IC card interface system is not only small enough to be portable, but also versatile enough to be capable of communicating with other systems through different mediums (e.g., RF, IR and RS232). An embodiment of the system according to the invention includes essentially two parts. The first part is a portable reader device 101 (Fig. 1) with the key pad entry (module) 106, an LCD display (module) 104, and an interface connector channel 110 (port). The second part is the interface module(s) including connectors, circuitry and cabling, e.g., 600 (see Fig. 6).

Figs. 1, and 1A-1C illustrate the external appearance of the IC card portable reader device 101 according to an embodiment of the invention and Fig. 2 is an exploded view of the portable reader device 101 of Fig. 1, showing an interface adapter plug 218 which would connect to the portable reader device 101, and how batteries 210 would be placed according to an embodiment of the invention. Adapter plug 218 has an electrical plug 220 which couples with connections 222 on an extension of the circuit board, as illustrated. As will be described later in more detail, this portion of the circuit board is flexed to provide a more compact yet sturdy design.

Fig. 2 also illustrates a bottom cover 214, IC card channel cover 212, the main portion of the case 102 and the top cover plate 114 in an exploded fashion. Figs. 3, and 3A-3F show the battery tray 204 and contacts 206, 208, enlarged and in more detail.

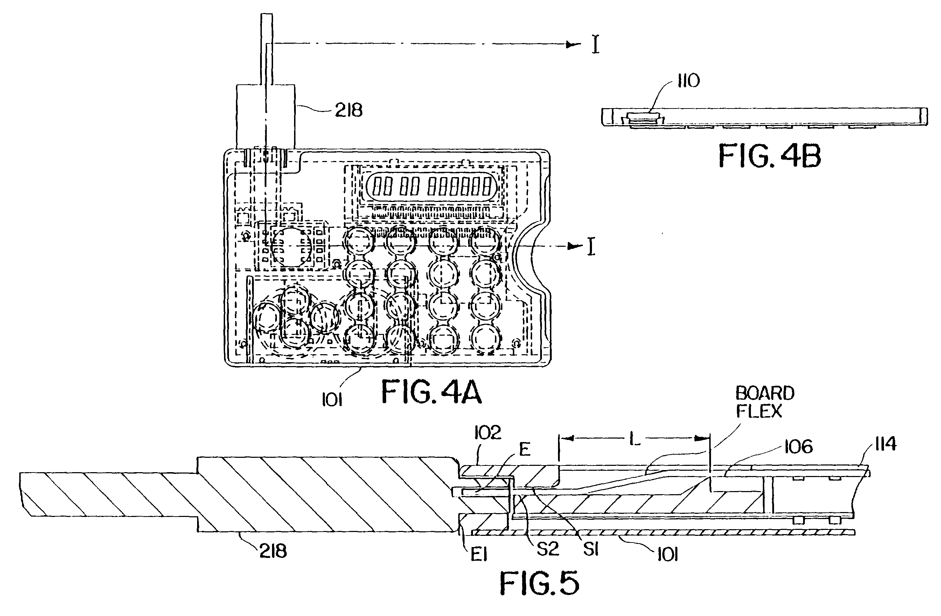

Fig. 4A shows the connection of the portable reader device 101 to the connector 218 in a transparent view. The connector 218 engages the extended portion of the circuit board as previously described, at the interface connector channel 110 (shown also in Fig. 4B). The flexing of the circuit board in this area is shown in the cross section of Fig. 5. By flexing, the length "L" of the flex portion of the board is reduced, making for a more compact overall design. Maintaining a reduced thickness of the hand held IC card reader is an object of the invention. For a hand held IC card reader, the form factor is important in ensuring the device is convenient and easy to carry. Optimizing size and weight are two of the many factors required to achieve these goals. One dimension may be more important to the convenience of a hand held device than another. In the case of the design of a hand held IC card reader according to the present invention, the thickness of the device is important to portability. A device of this size should be able to easily fit into a shirt pocket, wallet or a small purse, and the thickness dimension largely determines how easily it can be carried in a shirt pocket or a wallet, for example.

As already mentioned above, the IC card portable reader device 101 according to the invention is advantageously provided with an input-output (I/O) port for connecting to external device. It is common for circuit board edge contacts, or "fingers," to be used as an I/O connector to exit a computer or other electronic system enclosure, for example. However, generally, in these cases, size is not a driving factor, and therefore ample space for a mating connector is usually available, or the circuit board is positioned such that connecting cable thickness does not require a change in the height of the device enclosure.

In the case of the IC card portable reader device 101 according to the present invention, the printed circuit board is provided as a second layer of the device structure at the top, for example (see Fig. 2, an exploded view of one embodiment of the device). This permits using a low cost covering label as the faceplate or cover 114 to finish off the device and complete the membrane switch keypad 106K at the same time.

However, if the I/O connection fingers 222 were not somehow repositioned below the covering label 114, there would be a need to create a bump in the surrounding case 102, or to expose the connection fingers 222 themselves and cause the adapter plug 218 to protrude above the top of the portable reader device 101. This problem is solved according to one aspect of the invention by flexing, or bending, the circuit board as will be further described below, and is illustrated in Fig. 5.

Regarding the idea of bending a printed circuit board, it is only known to use this concept with flexible contacts which are in the form of a cable connecting, for example, internal electronic circuit boards in a device In the present case, a substrate thicker than such flexible contacts was needed for the external cable system to connect to, e.g., a printed circuit board thickness of about 0.020 in. (0.5mm). This thickness requirement caused two design problems which needed to be overcome and which could have resulted in a substantial increase in the thickness of the portable reader device 101.

The problem area was at the I/O adapter plug 218 and connector 220 which, when connected to the circuit board at connection fingers 222, would have protruded above the plane of the covering label 114. Conventional design practices would have simply increased the thickness in order to fit the requirements of the I/O adapter plug. However, keeping thickness minimized is an object of the invention. Therefore, in the present invention, a non-standard, counter-intuitive bending of the circuit board below the plane of the label 114 was used to keep the portable reader device 101 from getting any thicker. However, by doing this there were two design considerations which had to be taken into account:
1) the board could not be flexed beyond its elastic limit without becoming fatigued or snapping; and
2) the connector region of the board should ideally be perpendicular to the external wall of the surrounding device case or else the connector contact integrity could be compromised.

To deal with these problems and design considerations, the circuit board I/O connection fingers 222 were extended, e.g., approximately 10 mm in an exemplary embodiment, so that the circuit board could be safely flexed. Near the I/O connector region, the board is held firmly between two surfaces S1, S2 in the case 102 which holds it perpendicular to the outside wall of the portable reader device 101 (see Fig. 5).

In this design, there is a thin slot, e.g., about 6mm thick, which can be created by a slide or side action in tooling. This slot creates an upper and a lower surface S1, S2 to hold the flexed printed circuit board and (PCB) perpendicular to the outside edge of the portable reader device 101. To assemble the portable reader device 101, first the PCB I/O connection fingers 222 are inserted into this slot between surfaces S1 and S2. Then the PCB is held down against the top of the case 102 while screws, or a heat stake process, for example, secures the PCB into the case 102. The case features and the length of the PCB I/O connection fingers 222 will automatically align and position the fingers 222 at the correct location (see Figs. 2 and 5).

In Fig. 5, an arrangement of the flexed circuit board is illustrated in a cross-sectional view. The adapter plug 218 easily connects to the edge E of the circuit board through the slot provided, the edge of the circuit board being held perpendicular between surfaces S1, S2 of the device case 102. Where the circuit board is flexed over the portion of length L and then brought back to parallel, the covering label 114 can be installed flush with the top of the case 102 to form the membrane switch keypad 106K

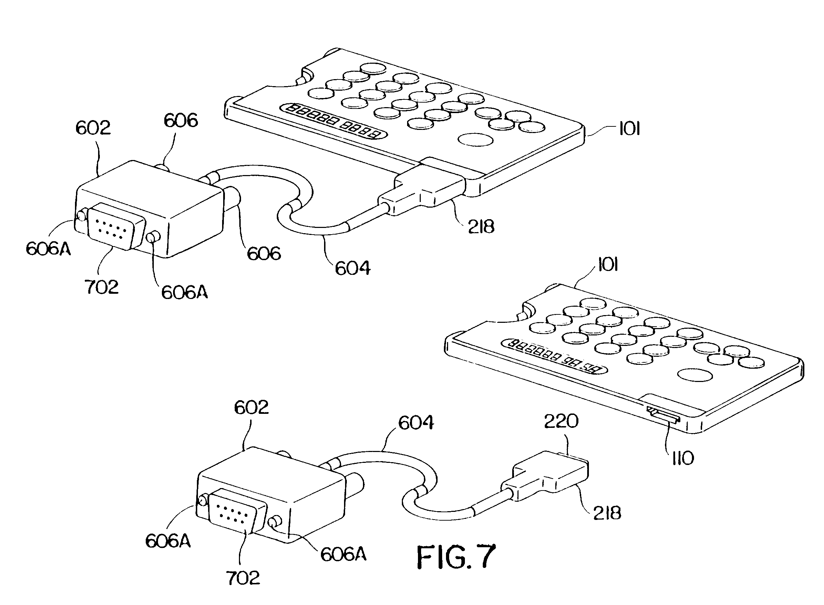

Figs. 6 and 7 show two different views of an interface module 600 and card portable reader device 101, in attached and unattached conditions. As can be seen, the module case 602 is coupled via cable 604 to the connector 218, previously described. The module case 602 is shown with knobs 606 which are used to attach the module case 602 to a standard interface socket (not shown) such as is provided on the back of a PC or modem, for example. Threaded tips 606A are for screwing into threaded sockets to secure a plug 702 on the module case 602 to the external device, e.g., PC or modem, in question.

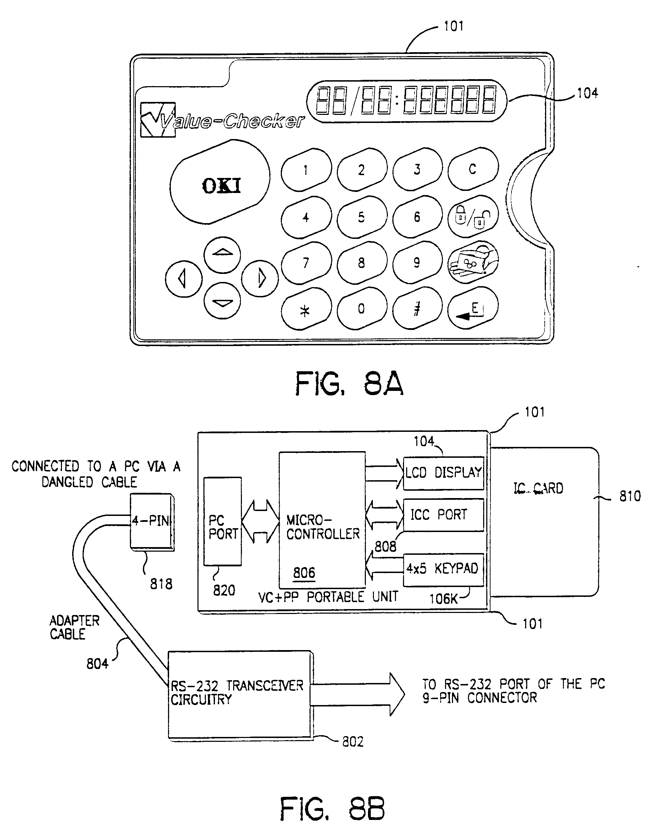

Figs. 8A and 8B show an embodiment of the portable reader device 101 and a basic block diagram of an embodiment of the electronic system of the device 101, and an interface module case 802 having therein an RS232 type transceiver circuit. A cable 804 couples the module case 802 to a connector 818, which connects to the portable reader device 101 at the interface connector channel 110. In this way, a micro-controller unit (MCU) 806 of the portable reader device 101 is interfaced for input and output with an external device through an interface port 820 and circuitry in the module case 802. The MCU 806 is coupled to the display 104, to the keypad 106K, and to an interface port 808 to an IC card 810 which can be inserted into the portable reader device 101. The RS-232 transceiver circuitry in the module case 802 interfaces to an RS-232 port of a PC or modem, for example, through a standard connector.

Fig. 8B is the block diagram of a typical embodiment of the invention, i.e., a VC+ portable reader device 101 with a PCA interface system 802, 804, 818. A summary of the system is now presented. The MCU 806 of the portable reader device 101, in an exemplary preferred embodiment, has the following features and characteristics. The MCU 806 is, for example, an 8 bit micro-controller with an internal LCD driver circuit to support up to a 12-character LCD display (a total of 116 segments) 104, a keypad interface for a 4 by 5 keypad matrix, an interface port 820 for a cable system, and an interface port 808 for an IC-card 810. Other types of micro-controllers could be used as one skilled in the art would understand, as could different keypads, and displays, the above description of a typical embodiment being presented for purposes of example and explanation only.

A typical LCD display 104 in an exemplary embodiment has the following characteristics. Display 104 is, for example, a ten-character display (a 12 numeric 7 segments display), wherein 5 additional segments can be used for special icons. Display 104 operates on 5 volts, and has ratios of 1/3 bias and 1/4 duty cycle, for example.

A typical keypad 106K in an exemplary embodiment has, for example, 20 keys arranged in 4 by 5 matrix (10 keys for digits and 10 keys for other functions). Keypad 106K has, applied thereon, for example, a printed silver ink top label 114, and the key switches would typically be membrane switches disposed as a keypad matrix on the top surface of the circuit.

A typical IC card interface port 808 in a preferred embodiment is compatible with ISO-7816, for example, and uses an off-the-shelf IC card connector (not shown) with card-in detection. According to the invention, a modified ISO protocol format would typically be used. The communication between the circuitry module case 802 and the portable reader device 101 through a 4 pin interface PC port 820, is based on a custom protocol described herein. The data transfer is based on block transfer, i.e., a block of data is transferred from one end to the other end in alternate order. Differences between the present invention's protocol and the ISO-7816 standard protocol are now explained.

According to the present invention, a unique "VC+ Protocol Format" is used. In this protocol, each data block consists of, for example, a header byte, a length byte, and a duplication of the header byte. A series of information bytes of the size indicated by the value of the length byte, and finally a checksum byte, are provided. The header byte is used to specify a particular one of a plurality of functions. The VC+ portable reader device 101 according to the invention supports the following exemplary functions: receiving a command data sequence from an external source and passing it down to the IC card for execution; transmitting response data after execution of a command from the IC card to an external source; and receiving displayable data from an external source and the IC card. Of course, a keypad data request and response function, a communication status and error information request and response, as well as power management functions, are also provided.

The connected mode of operation of the device includes two methods of IC card data transfer: pass-through and non-pass-through. In pass-through, the portable reader device 101 serves as a conduit for the data to flow between the IC card and an external source. In the second transfer method, non-pass-through, the portable reader device 101 will intercept the command and response data, and perform some operations thereon, e.g., data validation and/or error handling, for example.

In the ISO-7816 protocol, each data block consists of, for example, a prologue (3 bytes long) that includes NAD (address) bytes, PCB (status) bytes and LEN (lengthy) bytes, an information data section (the size of which is specified by the value of the LEN byte), and an epilogue (1 or 2 bytes long) that is used as a checksum for the whole block. In this protocol, the NAD is used for addressing, and the PCB to show the status of the transfer. However, this protocol does not offer control of other hardware peripherals (e.g., LCD or keypad), so its capability is limited.

The cable interface 818-820 in a preferred embodiment is a PCMCIA type low profile SMT receptacle, there being a direct connection to the printed circuit board through edge connector fingers 222, with a total of four interface pins needed: VCC, RX, TX, and GND.

The power system in a preferred embodiment uses, for example, two CR 2016 lithium coin cell batteries 210 for powering the internal circuitry. The batteries 210 are replaceable by the user through battery tray 204 which slides in and out. However, power can be supplied by an external PC when in the device is operating in the connected mode, in accordance with so-called smart power management.

The cable subsystem includes, in one preferred embodiment, RS-232 transceiver circuitry embedded, for example, in a module case 802 formed integrally with a cable, and provides for a data transfer rate at 4800 BAUD, for example. The interface also contains power circuitry to extract power from the RS-232 port of the external PC, for use by the portable reader device 101.

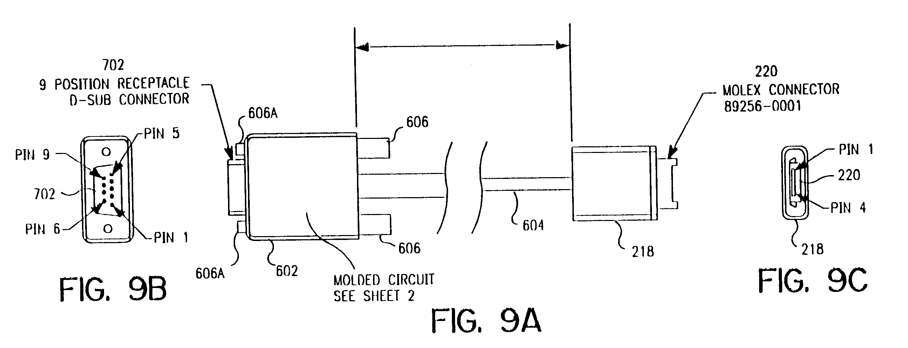

Figs. 9A-9C illustrate an exemplary embodiment of a cable subsystem, i.e., an interface module 600 according to an embodiment of the invention showing typical connector ends 702, 218 and cable 604 therebetween. The exemplary illustrated system uses as the electrical plug 220 a specified 4 pin Molex connector (220) to connect the interface port 820 thereby connecting the portable IC reader device 101 to the interface module case 602. Using the same interface port 820, the portable reader device 101 can connect to several different types of interface modules 600, as will be described later. Figs. 9A-9C therefore show just one example of the connectors and cable which could be used to implement an embodiment of the invention.

Depending on the communication medium used for hooking up the IC card interface system (reader and interface module) with an on-line network, for example, the circuitry in the interface module case 602 is designed to convert the digital information extracted from the IC card and provided by the portable reader device 101 into other kinds of signals, such as RF, IR or RS232 formats, and vice versa. For example, an RS-232 (PC) interface module when connected with the portable reader device 101, enables the IC card data to be transferred to a PC through the PC's RS-232 port, and data from the PC can be transferred back to the IC card as well.

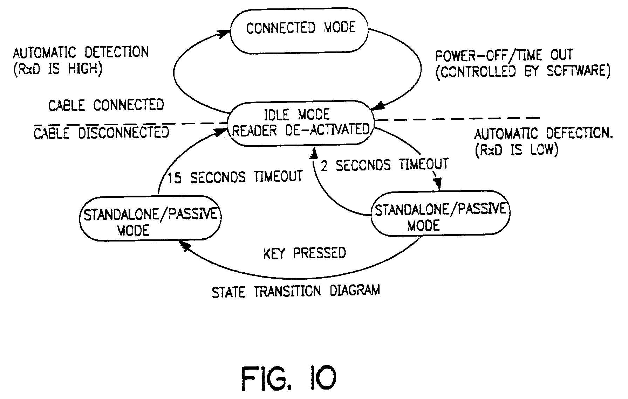

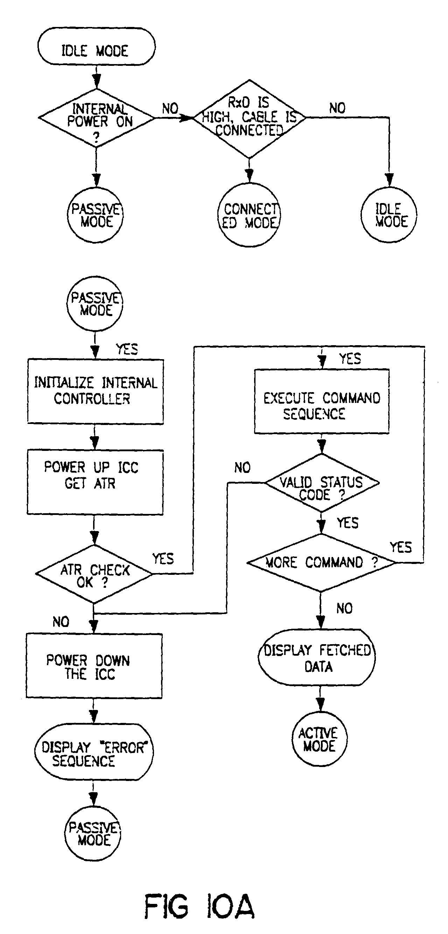

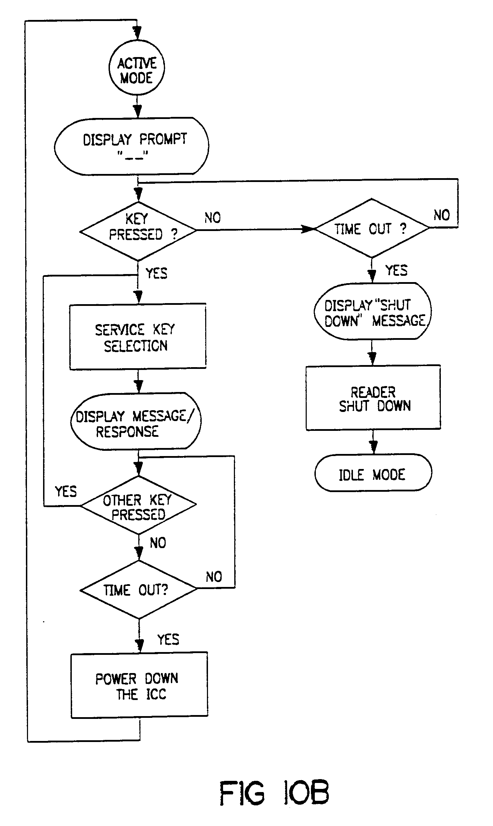

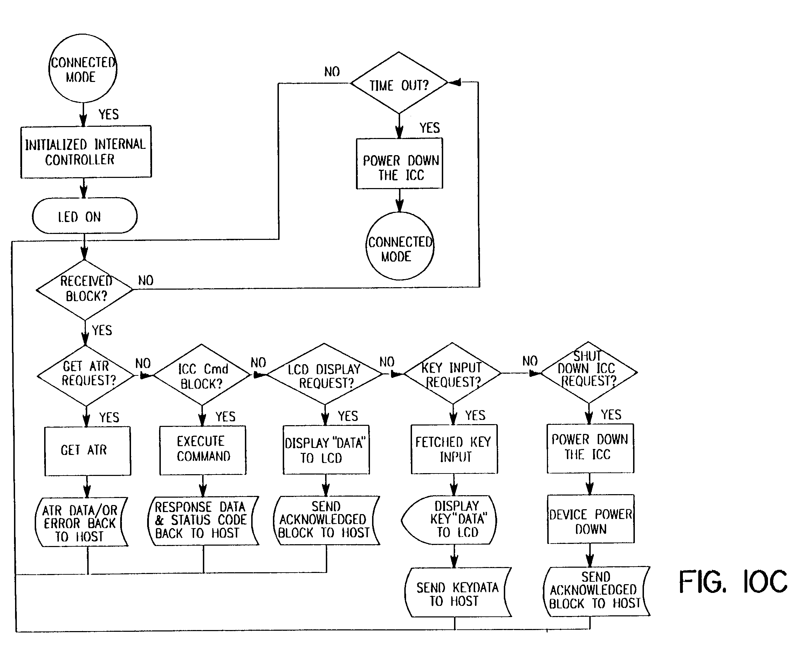

Figs. 10 and 10A-10C relate to operation processes and will now be described in detail. There are three modes of operation for the modular IC card interface system. The three operational modes are standalone/passive, standalone/active and connected mode. Fig. 10 illustrates these three operating modes in the form of a state diagram, and Figs. 10A, 10B and 10C illustrate the operating mode transitions in flow chart form.

When the portable reader device 101 is not connected to other systems, i.e., an interface module is not engaged, the portable reader device 101 is in a standalone mode. Upon powering on the portable reader device 101, it is in the standalone/passive mode. The portable reader device 101 will fetch and display pre-defined data from an IC card inserted therein. After the data display is finished, or when the display of data is interrupted by detection of the pressing of a key press, the portable reader device 101 goes into the standalone/active mode. When in the active mode, a user can perform various functions on the IC card by using the keypad 106K on the portable reader device 101. For example, the user can lock or unlock the IC card.

When an interface module such as described above is engaged, the system goes into the connected mode, communication control being from an external system. In the case of using an RS-232 interface in module case 602, software running in the PC may take total control over the communication port.

Figure 10 shows the relative transitions of these operational modes of the system. In more detail, the three modes are explained as follows. In the first mode, the standalone/passive mode, the following applies: the external interface (PC) port and the keypad data entry module are not active in this mode. The portable reader device 101 provides static (pre-defined) data from the IC card on the LCD display 104, i.e., balance, and/or traces data from the "purse." This mode is activated when a power-on button of the portable reader device 101 is pressed. At this time, the portable reader device 101 will display the static data on the LCD display 104 sequentially until it reaches the end of the sequence. After reaching the end of the display sequence, the portable reader device 101 will time out in 2 seconds if no key entry is detected during that time.

In the second mode, the standalone/active mode, the following applies: the external interface (PC) port is not active. Upon power-on, the user can set the portable reader device 101 to the active mode by interrupting the display sequence of the static data by depressing any key on the keypad 106K. Once the portable reader device 101 is in the active mode, the IC card remains activated and, the LCD 104 displays messages to instruct the user to enter data. The user can select a particular function by pressing a function key on the portable reader device 101. The portable reader device 101 determines the status of the IC Card and performs the requested function. At the termination of a particular function, the portable reader device 101 goes back to the active mode and waits for another function request. When the keypad entry module is idle for more than 15 seconds, the portable reader device 101 powers down the IC card and times out.

In the third mode, referred to as the connected mode, the following applies: the external interface (PC) port is active, i.e., when the portable reader device 101 is connected to the serial port, e.g., RS-232 of a PC, through an interface adapter module, it will be in the connected mode. Instructions and data will be coming in and out of the PC. Power to the portable reader device 101 may be supplied and controlled by the PC as well. Any time-out routine will be handled by the software in the PC. When the portable reader device 101 is in the connected mode, the IC card will be able to interact with a high level application program in the PC.

Exemplary applications of the portable reader device 101 in each of the three modes can be summarized as follows.

Standalone/Passive mode: display pre-defined data/information from the IC card, command sequence and display procedure are masked in the MCU, self-start operation upon device power-on, real-time clock (Optional).

Standalone/Active mode: the user can select specified data display from the IC card by making the selection through the keypad, IC card locking and unlocking by means of the pin presentation, check-change/change-checker functions (described in more detail later), IC card data record updating, external data transfer into the card, and optional on-board calculation functions.

Connected mode: complex applications designed at a high level are translated into command stream and sent through the RS-232 port to the IC card, responses from the command executions are returned through the same path, customized communication protocol provides an integrated application environment which utilizes both the LCD and keypad control of the reader, and enables the PC to perform home banking applications with the IC card.

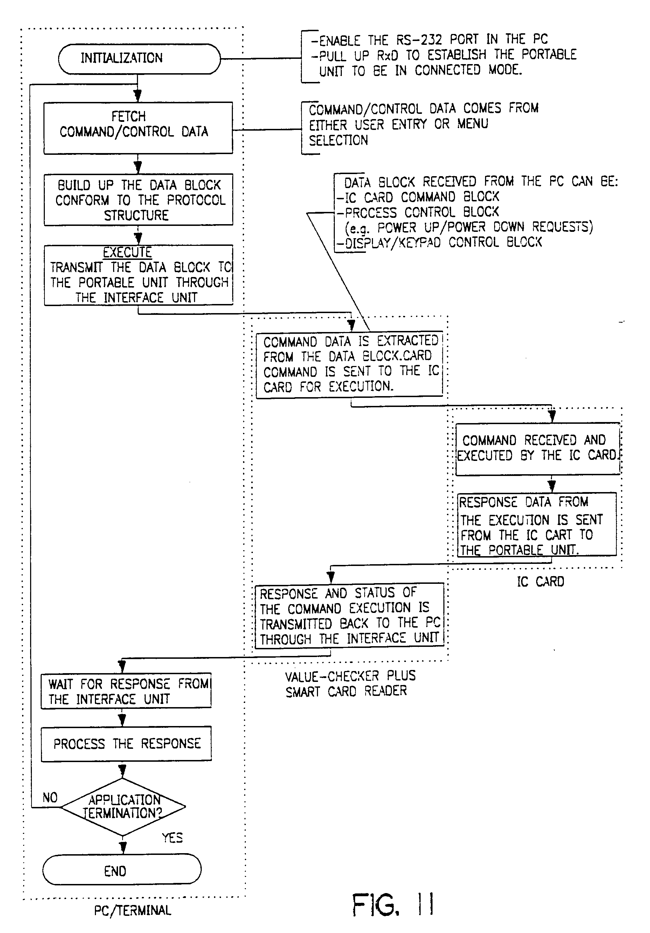

Fig. 11 is a high-level process flow chart for an embodiment of the invention utilizing the PC interface system. As illustrated in the process flowchart, a high level program for the interface system would operate in the following manner. At startup, the program initializes the serial port in the PC and establishes a communication link through the interface adapter and provides power to turn on the portable reader device. This also sets up the operation mode for the portable reader device. After initialization, the program will perform a classic command fetch and execute loop. The program will fetch a command or control data from the user, either by using an internal command sequence or an external command sequence entered through the keyboard. The program builds and sends out a data block that conforms to the custom protocol for the device, described above, to the portable reader device 101. The original command data embedded inside this data block will be extracted and processed by the micro-controller 806 in the portable reader device 101. If the command data is destined for the IC card, the portable reader device 101 will send out the command data to the IC card 810 through the card interface port 808. It then waits for the response generated by the command execution. For a data block that contains process control data, LCD output data, and keypad input request and response data, the portable reader device 101 will process the request. For either type of data block, the portable reader device 101 sends the command response or the process status back to the PC upon execution of the data block. Once the PC sends out a data block to the interface system, it waits for a response. When a response is received by the PC, it will be processed. Then the program will go and fetch a new command and start the cycle again, until termination. The above routine is presented solely for the purpose of explaining the invention, and other routines could be used within the spirit of the invention, as would be recognized by one skilled in the art. All proprietary rights in the routines described herein are expressly reserved.

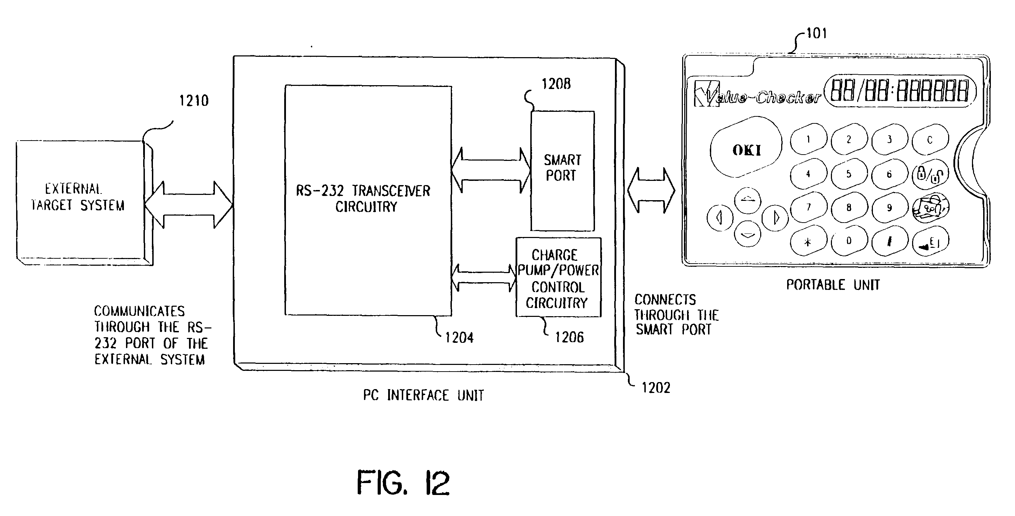

Fig. 12 is a block diagram of an embodiment of the invention having an RS-232 PC interface unit 1202, including RS-232 transceiver circuitry 1204, power conditioning/control circuitry 1206, and OKI 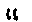 SmartPort 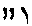 1208 which couples to the PC interface port 820 of portable reader device 101. The unit 1202 connects to an external target system, such as a personal computer (PC) 1210, via RS-232 standard communications. The PC interface unit 1202 is intended to enable connectivity between an IC card and a personal computer (PC). The portable reader device 101 provides the interface to the IC card 810, while the interface unit 1202 provides the interface to the PC system 1210 through an RS-232 port. The portable reader device 101 is connected with the interface unit 1202 through, for example, a 4-pin port, e.g., the OKI SmartPort 1208. In such an implementation of the invention, IC card commands and data are communicated through 1208 using, for example, the customized communication protocol of the invention. The illustrated PC interface unit includes the RS-232 transceiver circuitry 1204 in order to convert signals from the SmartPort 1208 to RS-232 compatible signals, and includes the power conditioning/control circuitry 1206 in order to provide power to the portable reader device 101 from the PC 1210 while it is operated in the connected mode. With the PC interface unit 1202 installed, the portable reader device 101 detects the existence of the external interface unit 1202 and switches its operation mode to the connected mode, as already mentioned. At that point, the PC 1210 will take full control of the communication with the portable reader device 101.

To initiate communication with the IC card 810, the PC 1210 will, for example, transmit a command to the portable reader device 101 to request a Reset of the IC card 810. The portable reader device 101 will interpret the command it receives from the SmartPort 1208, and initiate the Reset of the IC card 810. If the Reset of the IC card 810 is successful, and the portable reader device 101 receives ATR (Answer to Reset) bytes from the IC card 810, it will in turn send an ATR response back to the PC.

As mentioned before, there are two variations of operational method for the system in the connected mode: a pass-through method and a non-pass-through method. These communication methods and sequences are applicable for all the different interface systems described herein. The only difference among the several interface systems is the choice of communication medium and path.

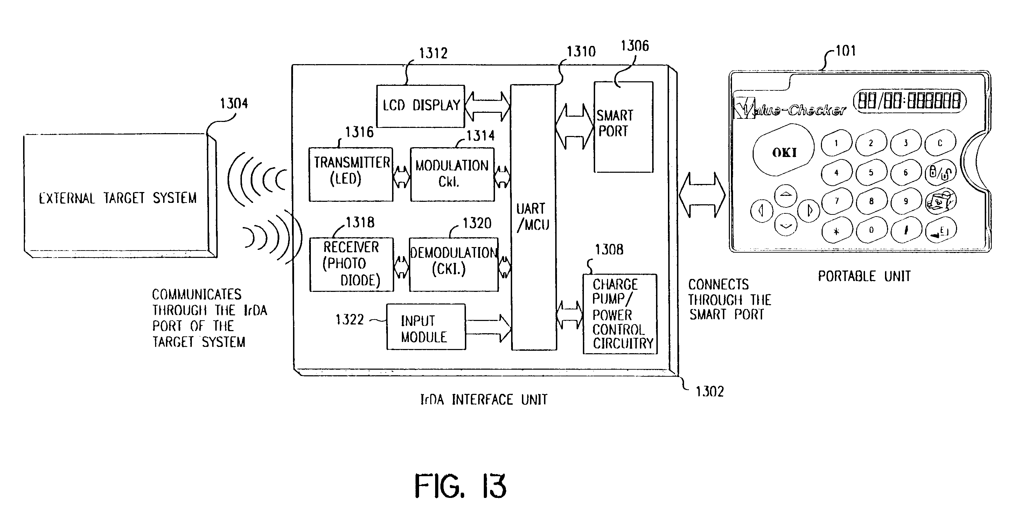

Fig. 13 is a block diagram of an embodiment of the invention having an infra-red (IrDA) interface unit 1302 which couples to an external target system 1304 via infrared signals. The unit 1302 includes a SmartPort 1306 which couples to the IC card portable reader device 101, power control circuitry 1308, UART/MCU 1310, LCD display 1312, modulation circuit 1314, transmitter (LED) 1316, receiver (photo-diode) 1318, demodulator 1320, and input module 1322. The IrDA interface system 1302 provides signal conversion from digital data coming out of the portable reader device 101 to IrDA compatible signals.

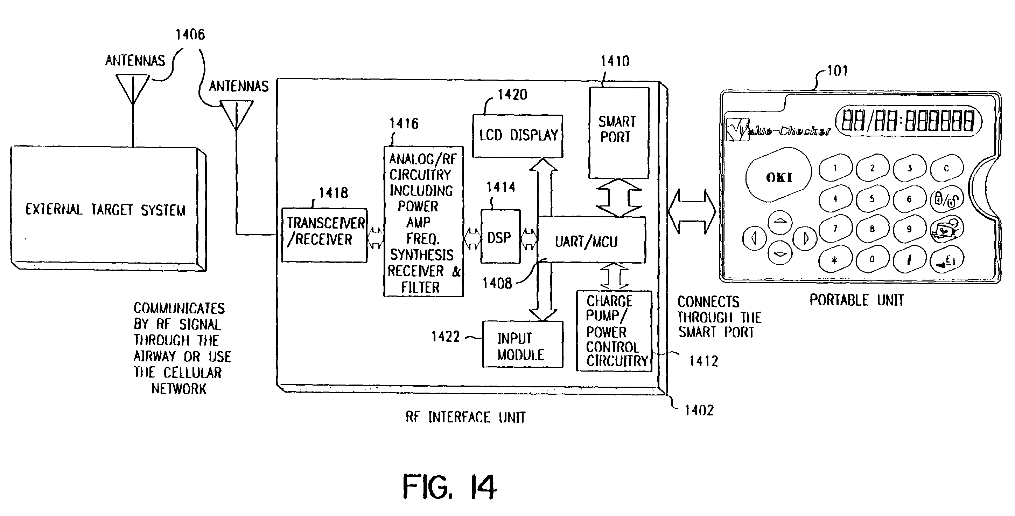

Fig. 14 is a block diagram of an embodiment of the invention having a radio frequency (RF) interface unit 1402, including a UART/MCU 1408 which interfaces to the portable reader device 101 through SmartPort 1410, power control circuitry 1402, digital signal processor (DSP) 1414, an analog RF block 1416 with power amplifier frequency synthesis receiver and filter, and transceiver 1418. Communication with the external target system 1404 in this case is through radio communication between antennas 1406, e.g., a cellular network. An LCD display 1420 and an input module 1422 are also provided. The RF interface system converts digital signals from the portable reader device 101 to an analog signal from the digital data signal, and then to an RF (modulated) signal for use in transmission through the air by way of an antenna 1406. A coaxial RF transmission could of course also be implemented if desired. Further, any of a variety of known RF techniques could be used within the spirit of the invention.

When the IR (infra-red light) interface module 1302 or the RF (radio frequency) interface module 1402 is used, the modular system enables the IC card data to be transferred through an IR or an RF medium, respectively, to the external target device 1404.

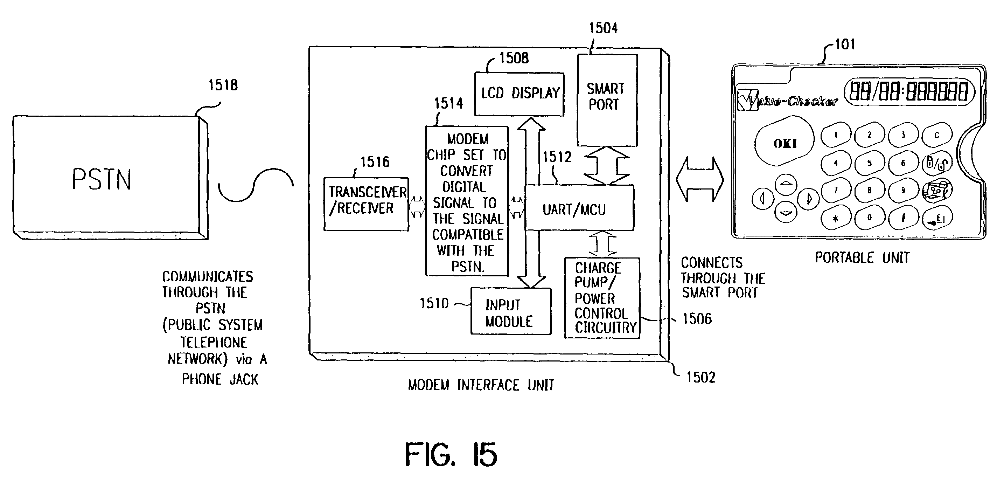

Fig. 15 is a block diagram of an embodiment of the invention having a modem interface unit 1502, which includes SmartPort 1504 coupling the unit to the portable reader device 101, power control circuitry 1506, an LCD display 1508, an input module 1510, UART/MCU 1512, a modem chip set 1514, and a transceiver circuit 1516. The unit couples to a target system through a public system telephone network 1518. The modem interface system 1502 provides signal conversion from digital data signals from the IC card 810 through the portable reader device 101 to signals compatible with the public system telephone network (PSTN) 1518.

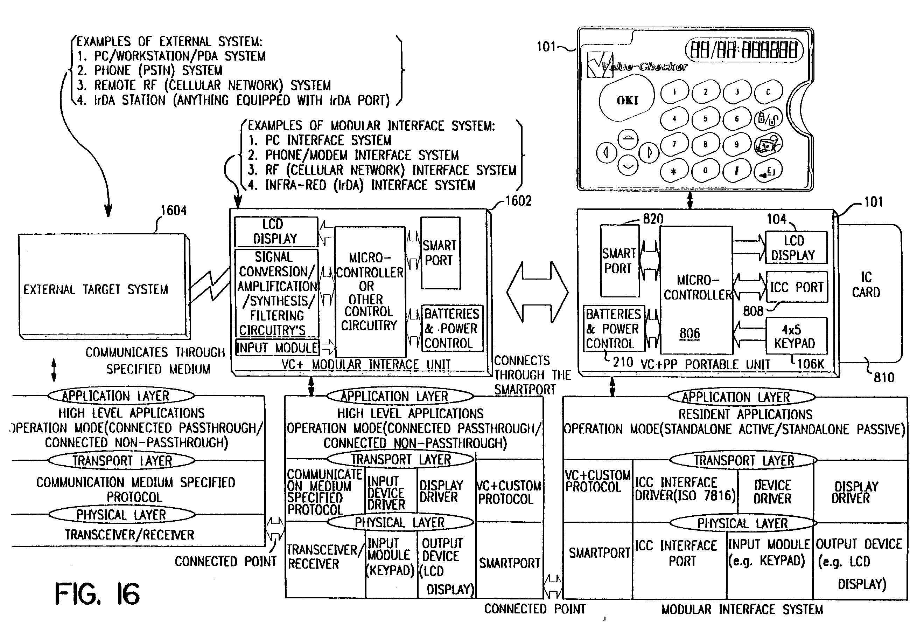

Fig. 16 is a diagram of an embodiment of the invention having a modular interface unit 1602 such as one of the types previously described, the diagram being for showing the three layers of communication protocol: Application, Transport and Physical layers. This overview of the ValueChecker+ modular interface system shows a generic interface system 1602 designed according to the invention. The block diagram also illustrates various connectivity methods for the several embodiments of the system, and the tri-level communications protocol is specified. A block diagram of the portable reader device 101 is also shown in this figure as well.

The invention takes advantage of a modular interface design as should have been apparent from the preceding description. A special command protocol, mentioned above, is used with the interface system. The command protocol is used to provide a standardized command syntax for communication between the external system 1604 and the MCU 806 in the portable reader device 101.

Below is a detailed description of an exemplary command protocol according to an embodiment of the invention.

As was previously mentioned, the command protocol used in the device PC interface is similar to the Type 1 block transfer protocol in the ISO 7816 part 3. Each data block according to the invention has a header, a length byte to indicate the total length of the subsequent data bytes, and a duplication of the header byte, optional data bytes and the final checksum byte that is equal to the XOR of all the proceeding bytes within the block. All the values for the command block are coded in Hex digits.

There are two modes of IC card (ICC) Command and Response data interchange between the portable reader device and the host PC. The first mode is the pass-through mode. In this mode, the host PC takes care of all the block framing, block sequence number tracking and error handling. The data sent out from the host PC to the portable reader device 101 is the exact command data the portable reader device 101 will send to the IC card 810. Also, the response resulting from the execution of the command will be sent back to the host PC without any modification. This mode is intended for the situation where the host PC takes direct control over the IC card 810.

The second mode is the non-pass-through mode. In this mode, the portable reader device 101 handles the command framing, sequence number tracking and error handling. The data sent out from the host PC is only the raw APDU command bytes, and the portable reader device 101 returns only the final response, e.g., data plus status word, from the command execution to the host PC.

Simplifying change calculations for IC card cash purchases is another object of the disclosed invention. The solution will now be described in more detail with reference to Figs. 17 to 20.

A personal IC card portable reader device 101 containing a micro-controller 806 and support circuitry, power supply (batteries 210), display 104, IC/smart card communications hardware (port 808) and software, and a simple keypad 106K, has been described above. The portable reader device 101 is constructed so that the user's IC card 810 is inserted and stored in a slot 108 in the portable reader device 101, and so that the user can easily and quickly perform interactions with the data stored on the card 810. In the Background and Summary sections above, the problem of determining how much available value (electronic cash balance) should be left in the IC card 810 after a purchase, has been discussed, and a solution summarized.

Prior to making a purchase, the user would turn on the portable reader device 101, whereupon it would immediately display the remaining balance on the card (standalone/passive mode). At that point, the user can push a function button, the "Check-Change" button, to start a procedure to calculate the expected remaining balance after his anticipated purchase.

After pushing the "Check-Change" button, the user enters the amount of the planned purchase using the numbered keys followed by the "enter" key. At this point the portable reader device will calculate and display the expected balance on the card following the purchase.

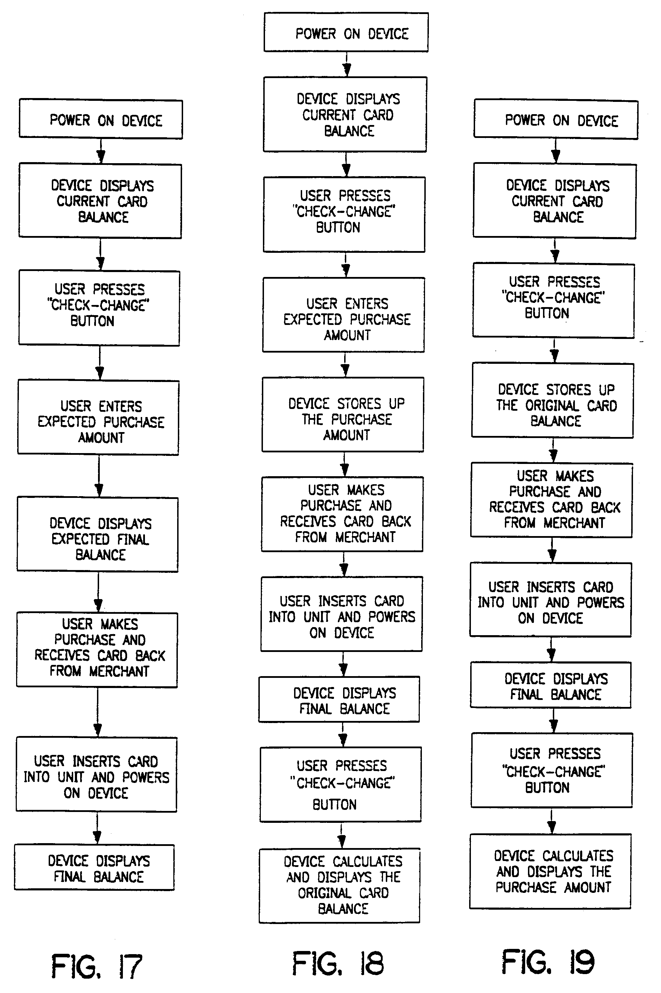

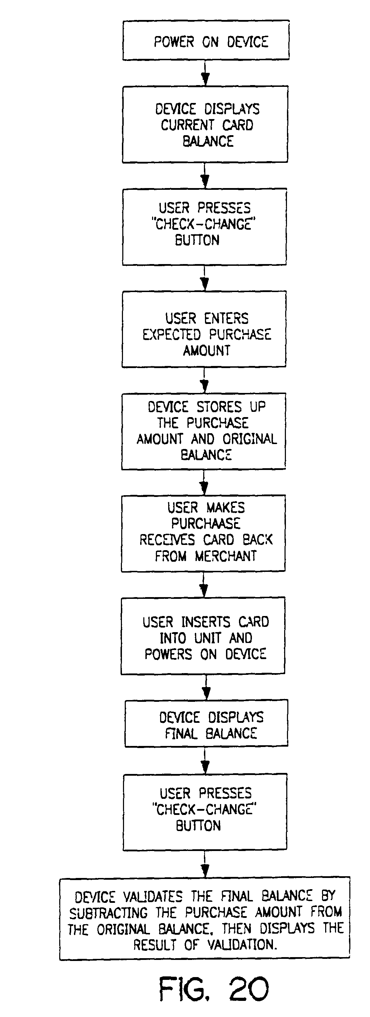

Upon completing the purchase and receiving the card back from the retailer, the user returns the card to his reader device and turns the portable reader device on, thereby displaying the remaining balance on the card. The user can then easily visually verify that the correct purchase amount has been deducted from the card and the remaining balance is correct. Fig. 17 shows a flow chart for this first operational sequence, a first embodiment of a change-checking method according to the invention. Fig. 18 is a flow chart for a first alternate embodiment of a change-checking method according to the invention, Fig. 19 is a flow chart for a second alternate embodiment of a change-checking method according to the invention, and Fig. 20 is a flow chart for a third alternate embodiment of a change-checking method according to the invention. The method in Fig. 20 is similar to the method in Fig. 17, except that in addition, the device stores the expected purchase and original balance amounts, and a validation is provided for by pressing the "Check-Change" function button to validate the final balance after the purchase, by subtracting the purchase amount from the original balance.

The proposed solution according to an exemplary embodiment of the invention offers several distinct advantages over using a calculator to determine the expected remaining balance after a purchase. The entry for the starting and ending balances of the card is automatic upon insertion into the reader (standalone/passive mode), and does not have to be manually entered into a calculator by the user. This not only saves time, but considerably reduces the chance of error. Further, the card reading function and change calculation functions are combined into one compact, easy to use unit, eliminating the need for separate card reader and calculator device.

Other alternative embodiments which are considered to be within the scope of the invention are now mentioned. The solution may also be accomplished with simple variations of the above described preferred embodiment. These include:
1) Calculating the correct starting balance based on the final balance and purchase amount. The user enters the purchase price based on the final remaining balance, and verifies that the calculated starting balance matches the original balance shown (see Fig. 18).
2) The IC card reader device stores the starting balance and ending balance, and calculates the expected purchase value. The user then verifies that the expected purchase amount corresponds to the actual purchase amount (see Fig. 19).
3) Alternatively, the portable reader device can be made such that the comparisons are made automatically rather than through activation by the user. For instance, the portable reader device stores the initial balance in memory, the user enters the expected purchase amount, and the user makes the purchase. When the card is returned to the portable reader device after the purchase, the portable reader device reads and records the final card balance, and indicates to the user that this ending balance is correct (Fig. 20).

This invention proposes a simple solution to the problem of verifying the correct purchase amount and expected balance when using IC card/smart card electronic cash for purchases. It combines a card reader with a keypad in such a way that the user can quickly and accurately verify the expected balance on his or her card following a purchase.

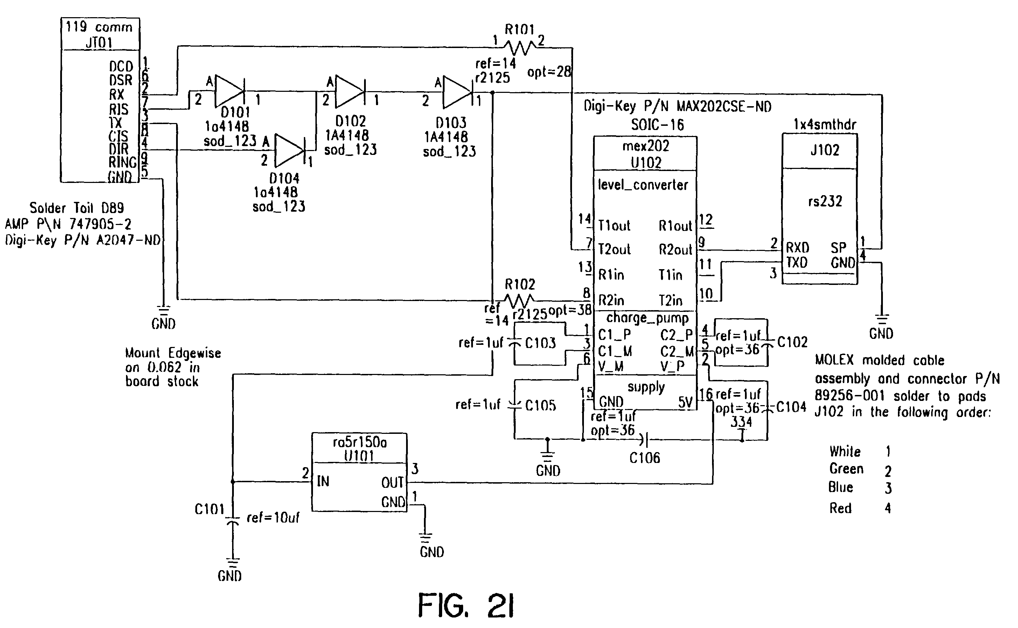

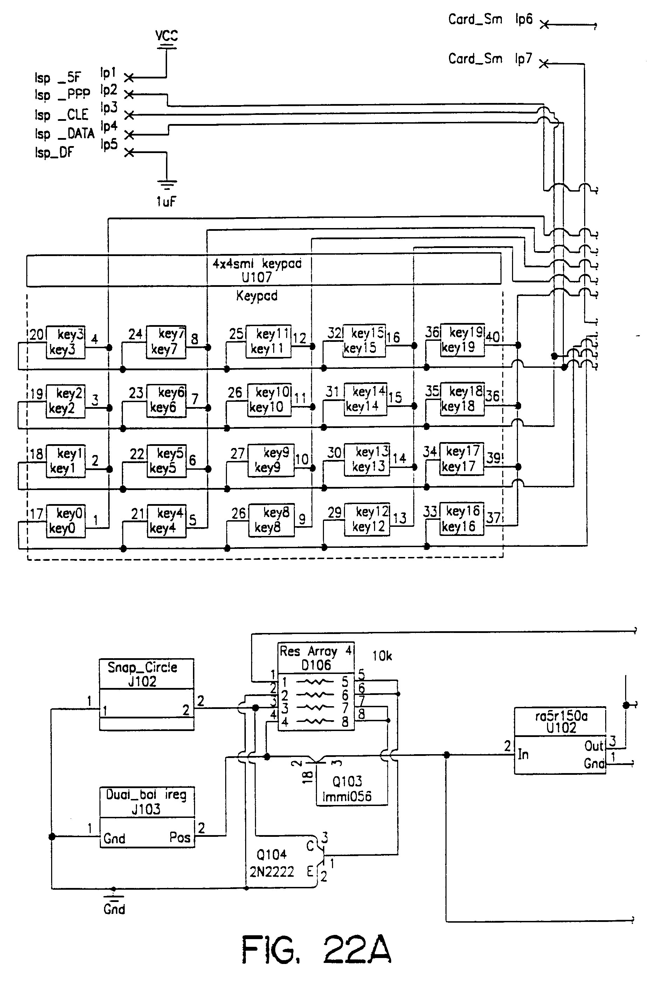

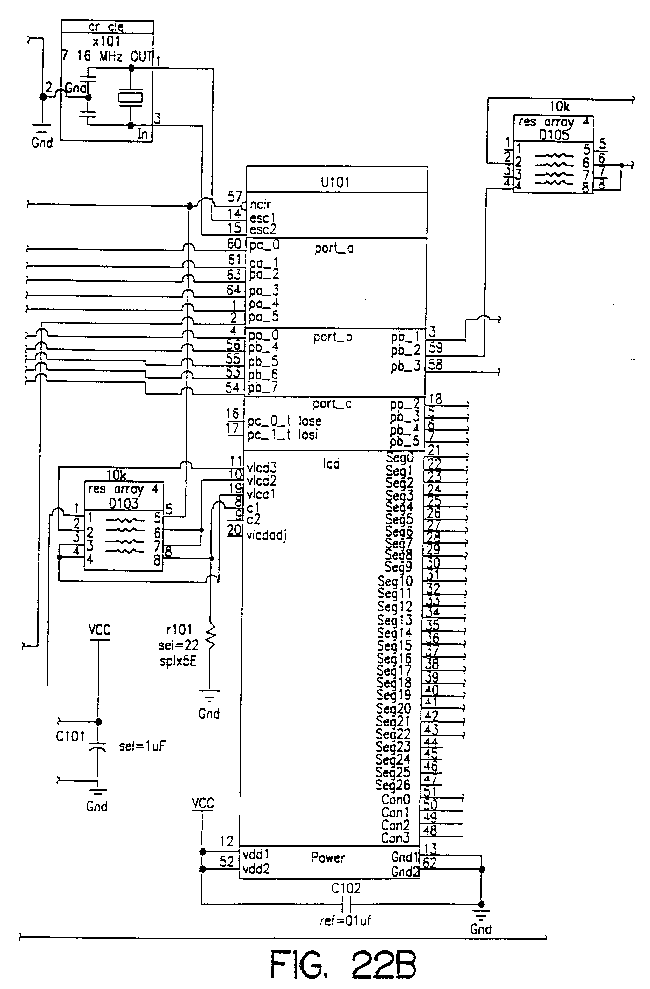

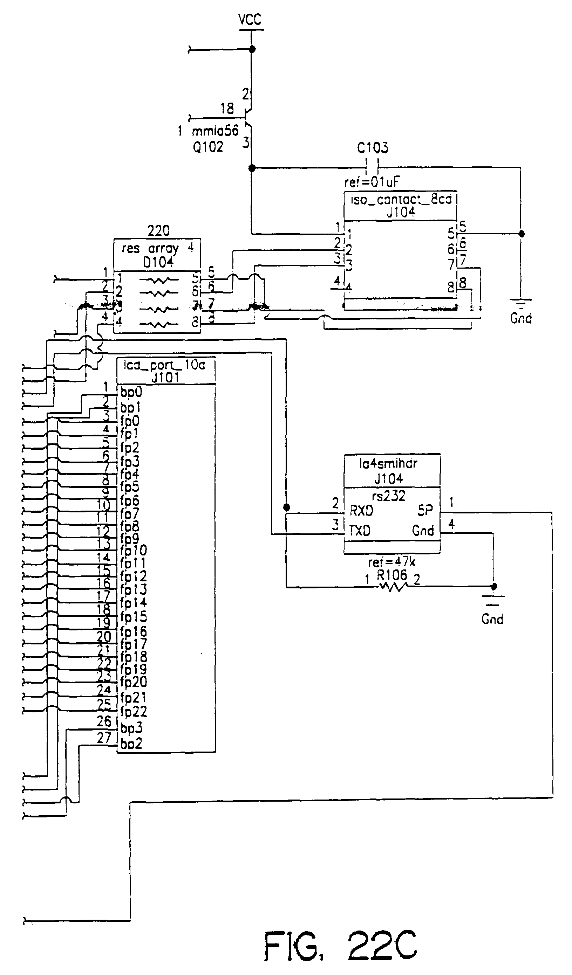

Fig. 21 is a schematic diagram for an embodiment of an interface unit according to the invention and Fig. 22 is a schematic of an embodiment of the IC card portable reader device 101 according to the invention.

The portable reader device 101 in the illustrated exemplary preferred embodiment is contemplated to support only T=0 and T=1 IC cards. However, support for other types of memory cards could be added within the spirit of the invention.

The modular IC card interface system can be summarized as including two basic components, the portable reader device 101 and the interface module 600 (see e.g., Figs. 6, 8 and 12). The portable reader device 101 includes all the necessary electrical circuitry to interface with an IC card 810, an output module, e.g., a liquid crystal display (LCD) 104 for data output display, an input module, e.g., a keypad 104, and an interface port 820. The interface port 820 is the same for the portable reader device 101, and all the interface modules to which it may be connected to, e.g., an RS-232 module 802/1202, a modem module 1502, an RF module 1402, an IR module 1302, or any other specialized modules which could be useful, such as a printer interface module, for example. By connecting different interface modules to the portable reader device 101, the IC card data can be transferred through different communication channels as required. A specialized command protocol is used to provide a common protocol for all the interface modules regardless of the medium, which will be described in detail later.

As mentioned above, according to an exemplary embodiment of the invention, there are three modes of operation, a standalone/passive mode which provides a static data display, a standalone/active mode which allows expanded functions, and a connected mode in which an external system, e.g., a personal computer (PC), takes control of the device.

In the connected mode, power may be supplied from external source via the interface module, e.g., from a PC via the RS-232 interface unit 1202. Further, in the connected mode, the LCD 104 and keypad 106K in the portable reader device 101, can be controlled by an external application program. The interface module takes care of signal conversion, and the portable reader device 101 does not need adjustment to accommodate different interface modules, i.e., a change of interface modules is transparent to the portable reader device 101 for data transfers.

Uses for the interface include, but are not limited to, the following :

Home Banking with a PC - the user can employ the interface system along with a modem-equipped PC to download funds from his/her bank account to the IC card, or to update the transaction profile stored in the IC card.

Access Control - the user can use an IC card to gain access to a computer network or another place. This is accomplished by using the interface system to provide a link for authentication data residing in an IC card to be validated by an external terminal.

Data logging - data can be communicated between an IC card and a terminal through the interface system, enabling various other applications to be implemented.

It will be apparent to one skilled in the art that the manner of making written description of the preferred embodiments, taken together with the drawings.

It will be understood that the above description of the preferred embodiment of the present invention is susceptible to various modifications, changes, and adaptations, and the same are intended to be comprehended within the meaning and range of equivalents of the invention.

Although the disclosed embodiments relate to providing a serial interface, the invention is not limited to such, but may also provide a parallel interface as required for a particular application.

## Claims

1. A portable IC card reader device, comprising:
a compact housing, including a portion which accommodates at least one battery;
a keypad, disposed in the housing, having numeric keys and function keys;
a display, disposed in the housing, which displays alpha-numeric characters; and
electronic circuitry, disposed in the housing, interconnecting the keypad and display;
wherein the electronic circuitry includes a micro-controller, an IC card port, and an input/output port; and
wherein the micro-controller is operative to control reading and writing to and from an IC card, and to perform functions related to IC card transactions.

2. The reader device according to claim 1, further comprising an interface module which couples to the input/output port and interfaces the reader device with an external device over a communications medium.

3. The reader device according to claim 2, wherein the interface module is a serial interface module, the module comprising a housing, serial transceiver circuitry disposed in the housing, a first input/output connector which connects to the input/output port of the reader device, a cable coupling the connector to the transceiver circuitry, and a second input/output connector which couples the serial interface module transceiver to an external device.

4. The reader device according to claim 3, wherein the serial interface module transceiver circuitry comprises RS-232 transceiver circuitry.

5. The reader device according to claim 3, wherein the serial interface module transceiver circuitry comprises infra-red transceiver circuitry.

6. The reader device according to claim 3, wherein the serial interface module transceiver circuitry comprises radio-frequency transceiver circuitry.

7. The reader device according to claim 3, wherein the serial interface module transceiver circuitry comprises modem circuitry.

8. A method of operating a portable IC card reading device according to claim 1, comprising:
reading a stored value from an IC card when the IC card is inserted in the device;
receiving user input corresponding to an amount of a planned purchase;
automatically calculating and displaying an expected balance after the planned purchase; and
after making the planned purchase with the IC card, reading a stored value from an IC card when the IC card is inserted in the device, and displaying the value read.

9. A method of operating a portable IC card reading device according to claim 1, comprising:
reading a first stored value from an IC card when the IC card is inserted in the device prior to being used to make a purchase by a user;
reading a second stored value from the IC card when the IC card is inserted in the device after being used to make the purchase by the user; and
automatically calculating and displaying a purchase price based on the first and second stored values.

10. A method of operating a portable IC card reading device according to claim 1, comprising:
reading a first stored value from an IC card when the IC card is inserted in the device prior to being used to make a purchase by a user;
receiving user input corresponding to an amount of a purchase;
reading a second stored value from an IC card when the IC card is inserted in the device after being used to make the purchase by the user; and
automatically verifying the first stored value corresponds to the second stored value minus the purchase amount.

11. A portable IC card reader device, comprising:
a compact housing having a form factor sized to fit in a shirt pocket or wallet;
keyed input means for receiving keyed-in user input data;
display means for displaying data to a user;
IC card reading/writing means for reading/writing to/from an IC card;
processing and control means for processing data and controlling operations of the reader device; and
interface means for interfacing the IC card reader device with an external device for the exchange of at least data.

12. The reader device according to claim 11, wherein the display means comprises a liquid crystal display device.

13. The reader device according to claim 11, wherein the keyed input means comprises a pin-pad keypad having a plurality of keys including numeric and function keys.

14. The reader device according to claim 11, wherein the processing means comprises a micro-controller.

15. The reader device according to claim 11, wherein the interface means comprises an input/output port.

16. The reader device according to claim 15, further comprising an interface module which couples to the input/output port and interfaces the reader device with an external device over a communications medium.

17. The portable IC card reader device according to claim 1, wherein the portion which accommodates at least one battery comprises a removable battery tray.

18. The portable IC card reader device according to claim 17, wherein the removable battery tray comprises first and second battery compartments for receiving a respective battery therein, and battery contacts for connecting batteries received in the battery tray to the electronic circuitry of the device.

19. The reader device according to claim 11, wherein the device has a plurality of modes of operation, including:
standalone passive mode, wherein the reader device is not connected to any adapter and simply displays data read from an IC card;
standalone active mode, wherein the reader device is not connected to any adapter, accepts and responds to user commands input on the keyed input means, and interacts with an IC card according to the user commands;
connected pass-through mode, wherein the reader device is connected to an adapter, the adapter is connected to an external host or controller device, and the external host or controller controls the reader device; and
connected non-pass-through mode, wherein the reader device is connected to an adapter, the adapter is connected to an external host or controller device, and the reader device performs some operations independently of the external host or controller device.

20. The reader device according to claim 19, wherein the device has a communications protocol for communicating with external devices, the protocol provides for:
communicating with a plurality of different external adapter devices;
operating in any of said modes of operation;
handling a plurality of reader operations, including IC card interfacing, display of information on said display means, power management, and keypad entry on said keyed entry means; and
communications error handling and status.

21. In a portable IC card reader device, a printed circuit board arrangement comprising:
a housing having first and second parallel planar surfaces; and
a printed circuit board disposed in the housing, including a substrate having a thickness of about 0.020 in. (0.5mm), and including a portion which engages an external connector through an opening in the housing;
wherein the printed circuit board is held by the housing at a first position, parallel to and between the planar surfaces of the housing, at the opening in the housing, and is held at a second position different from the first position, parallel to the planar surfaces of the housing and adjacent to the first parallel planar surface of the housing, the printed circuit board having a flex region between the first position and the second position.

22. The printed circuit board arrangement according to claim 21, wherein at the first position, the printed circuit board extends in a direction substantially perpendicular to an edge of the housing at the opening in the housing.

23. The printed circuit board arrangement according to claim 21, wherein the portion which engages the external connector comprises four electrical contacts.

24. The printed circuit board arrangement according to claim 23, wherein the external connector is a four pin molex connector and wherein the portion which engages the external connector is adapted to mate with a four pin molex connector.

25. An interface module for a portable IC card reader device, comprising:
a housing;
serial transceiver circuitry disposed in the housing;
a first input/output connector which connects to an input/output port of the portable IC card reader;
a cable coupling the connector to the transceiver circuitry; and
a second input/output port which couples the serial interface module transceiver to an external device.

26. The interface module according to claim 25, wherein the serial interface module transceiver circuitry comprises RS-232 transceiver circuitry.

27. The interface module according to claim 25, wherein the serial interface module transceiver circuitry comprises infra-red transceiver circuitry.

28. The interface module according to claim 25, wherein the serial interface module transceiver circuitry comprises radio-frequency transceiver circuitry.

29. The interface module according to claim 25, wherein the serial interface module transceiver circuitry comprises modem circuitry.

30. A method of operating a portable IC card reading device ,comprising:
reading a stored value from an IC card when the IC card is inserted in the device;
receiving user input corresponding to an amount of a planned purchase; and
calculating and displaying an expected balance after the planned purchase.

31. The method according to claim 30, further comprising:
after making a purchase with the IC card, reading a stored value from the IC card when the IC card is inserted in the device, and displaying the value read.

32. A method of operating a portable IC card reading device, comprising:
reading a first stored value from an IC card when the IC card is inserted in the device prior to being used by a user to make a purchase;
reading a second stored value from the IC card when the IC card is inserted in the device after being used by a user to make the purchase; and
calculating and displaying a purchase price based on the first and second stored values.

33. A method of operating a portable IC card reading device, comprising:
reading a first stored value from an IC card when the IC card is inserted in the device prior to being used by a user to make a purchase;
receiving user input corresponding to an amount of a purchase;
reading a second stored value from the IC card when the IC card is inserted in the device after being used by a user to make the purchase; and
verifying the first stored value corresponds to the second stored value minus the purchase amount.

34. A portable modular IC card interface system, comprising:
a compact portable personal IC card reader; and
a plurality of different interface modules.

35. The system of claim 34, wherein the reader comprises:
a housing;
IC card interface circuitry and hardware;
a user keypad;
a user information display;
an interface port for connecting the reader to the plurality of different interface modules; and
an internal power source.

36. The system of claim 34, wherein the plurality of different interface modules include:
an RS232 interface module;
an infra-red interface module;
a telephone network interface module; and
a radio-frequency interface module.

37. The system of claim 34, wherein the system uses a communications protocol that facilitates communications with the plurality of different interface modules through the interface port.

38. The system of claim 34, wherein the system has a plurality of operating modes, the modes including:
standalone passive mode;
standalone active mode; and
connected mode;
wherein, when the reader is not connected to an external device through any of the plurality of different interface modules, the reader operates in the standalone passive mode or the standalone active mode;
wherein, in the standalone passive mode, the reader operates to display data from an IC card to a user;
wherein in the standalone active mode, the reader operates to receive user input and interact with an IC card based on the user input; and
wherein in the connected mode, the reader device operates either interactively or passively with an external device to interface the external device to an IC card.

39. The system of claim 38, wherein, when in the connected mode, the external device can control the reader keypad and display, and can control an IC card inserted in the reader.

40. The system of claim 39, wherein the system uses a common communications protocol that facilitates communications with the external device through any one of the plurality of different interface modules through the interface port.

41. The system of claim 40, wherein the protocol comprises a data block having at least three fields, the fields comprising"
a header and length information field;
an optional information/data field; and
a checksum field.

42. The system of claim 41, wherein the header and length information field comprises a function/command, wherein length data indicates the presence of and size of data associated with the command/function.

43. The system of claim 42, wherein the function/command comprises at least one of a display control command; a keypad entry control, status, and reference inquiry; and IC card communication.

44. The system of claim 34, wherein the plurality of different interface modules provide for communication at a plurality of baud rates.

45. The system of claim 34, wherein power can be provided to the reader through any one of the plurality of different interface modules.
